Europäisches Patentamt

European Patent Office

Office européen des brevets

(19)

(11) **EP 1 672 340 A1**

(12) **EUROPEAN PATENT APPLICATION**
published in accordance with Art. 158(3) EPC

(43) Date of publication:
**21.06.2006 Bulletin 2006/25**

(51) Int Cl.:
***G01J 3/51*** (1985.01)

(21) Application number: **04792144.0**

(22) Date of filing: **07.10.2004**

(86) International application number:
**PCT/JP2004/014847**

(87) International publication number:
**WO 2005/036114 (21.04.2005 Gazette 2005/16)**

(84) Designated Contracting States:
**DE**

(30) Priority: **07.10.2003 JP 2003348625**

(71) Applicant: **Olympus Corporation
Tokyo 151-0072 (JP)**

(72) Inventors:
 • **KATSUMATA, Masaya
 c/o Intell. Prop. Supp. Dept.
 -cho, Hachioji-shi
 Tokyo 192-8512 (JP)**
 • **WADA, Toru
 c/o Intell. Prop. Support Department
 -cho, Hachioji-shi
 Tokyo 192-8512 (JP)**

 • **AJITO, Takeyuki
 c/o Intell. Prop- Support Depart.
 -cho, Hachioji-shi
 Tokyo 192-8512 (JP)**
 • **KOMIYA, Yasuhiro
 c/o Intell. Prop. Support Departt
 -cho, Hachioji-shi
 Tokyo 192-8512 (JP)**

(74) Representative: **von Hellfeld, Axel
 Wuesthoff & Wuesthoff
 Patent- und Rechtsanwälte
 Schweigerstrasse 2
 81541 München (DE)**

(54) **IMAGE DISPLAY APPARATUS AND IMAGE DISPLAY METHOD**

(57) When an image of a certain band in a multiband image (12) obtained by a multiband camera (1) capable of capturing at least two bands is displayed with a computer (11) and at least one pixel is specified on the image, a spectrum computing section (13) estimates a spectrum from the signal value of at least one pixel specified in the multiband image and displays the spectrum on a spectrum output screen (14).

FIG. 1

**Description**

Technical Field

The present invention relates to an image display apparatus and an image display method which display spectral graphs, chromaticity values, and relative values of a plurality of object points from a multiband image captured by a multiband camera.

Background Art

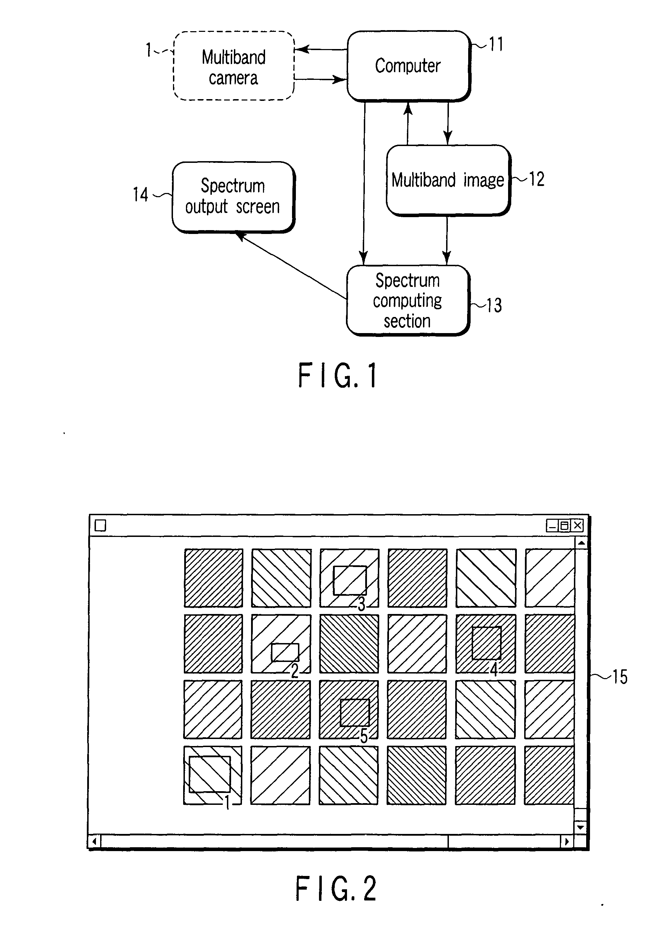

A multiband camera is a camera that captures in a plurality of bands having more specific wavelength transmission characteristics than those of the R, G, B filters of an ordinary 3-band color camera. As means for switching bands, a wavelength variable filter as disclosed in Jpn. Pat. Appln. KOKAI Publication 2001-99710 may be used, or a rotating filter as disclosed in U.S. Pat. No. 6,549,653 may be used. Although the number of bands differs, depending on the apparatus and purpose, the transmittance characteristic in each band is as shown in FIG. 2 of Jpn. Pat. Appln. KOKAI Publication 2001-99710.

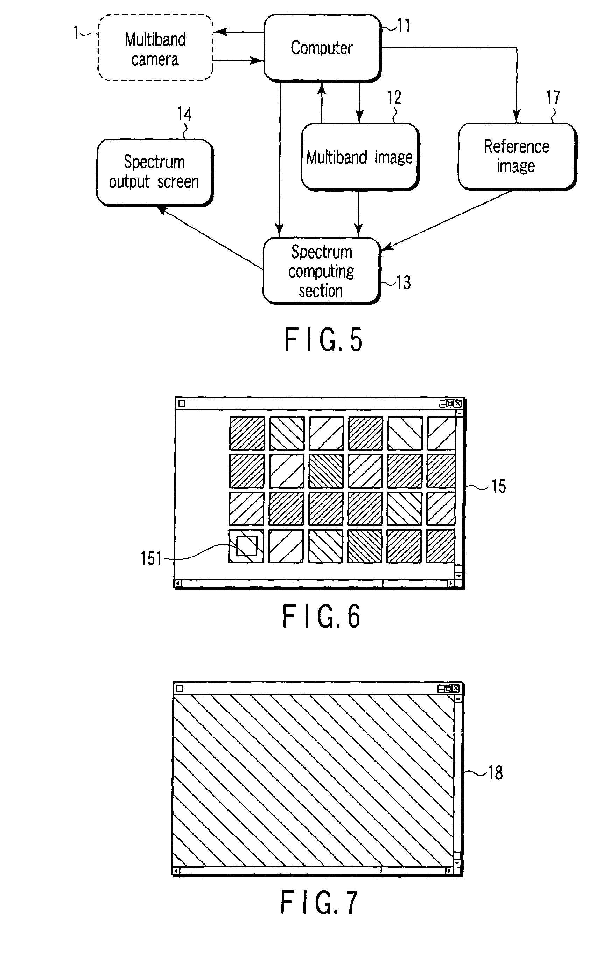

Since there are generally as many captured images as there are bands, there are 16 images in 16 bands, as shown in FIG. 2 of Jpn. Pat. Appln. KOKAI Publication 2001-99710, and there are 10 images in 10 bands with a rotating filter, as shown in FIG. 5B of U.S. Pat. No. 6,549,653.

Multiband image captured by a multiband camera can be displayed in images band by band.

In both of Jpn. Pat. Appln. KOKAI Publication 2001-99710 and U.S. Pat. No. 6,549,653, although a method of estimating a spectrum has been disclosed, a method of actually manipulating a multiband image in software has not been disclosed.

A spectral display is generally made for a desired specific place, not for the whole of the captured image. To do this, an arbitrary place should be specified in software and a spectrum be displayed only in that place.

Furthermore, when images of 401 bands have been obtained by capturing from 380 nm to 780 nm at intervals of 1 nm, a spectrum can be estimated accurately from the images of 401 bands separated at 1-nm intervals. In contrast, when an image is captured in less than 401 bands, that is, at intervals of a sampling wavelength larger than 1 nm, it is necessary to estimate a spectrum almost equal to that in 401 bands from fewer items of image data with a longer interval of sampling wavelengths. Since it is conceivable that the spectrum differs according to the estimation method, it is better that an estimation method should be selected arbitrarily.

Furthermore, when a plurality of areas are specified, or when spectrums are displayed from a plurality of images, a comparison between spectrums is desired.

Once the spectrum has been determined, a color measurement value can be calculated using the spectrum. Here, in a case where a plurality of areas have been defined, if a color difference, such as $\Delta E$, is calculated with respect to a reference and then is displayed, this enables the user to deepen the understanding of images. In addition, a display method is desired which enables the user to recognize at a glance what is the color difference ($\Delta E$) of each pixel in the image from the reference area.

Disclosure of Invention

It is, accordingly, an object of the present invention to provide an image display apparatus and an image display method which are capable of easing the burden of evaluating images on the user by proposing a graphical user interface (hereinafter, abbreviated as a GUI) display method for representing a graph representation of spectrums, chromaticity values and the difference between them in connection with a multiband image captured by a multiband camera.

According to a first aspect of the present invention, there is provided an image display apparatus which displays a multiband image obtained by a multiband camera capable of capturing at least two bands, the image display apparatus characterized by comprising:

image display means for displaying an image of a certain band in the multiband image;
pixel specifying means for specifying at least one pixel on the image of the certain band displayed on the image display means;
spectrum estimation means for estimating a spectrum from the signal value of the at least one pixel specified by the pixel specifying means in the multiband image; and
spectrum display means for displaying the spectrum estimated by the spectrum estimation means.

According to a second aspect of the present invention, there is provided an image display apparatus which displays a multiband image obtained by a multiband camera capable of capturing at least two bands, the image display apparatus characterized by comprising:

image display means for displaying an image of a certain band in the multiband image;
pixel specifying means for specifying at least two pixels in the image of the certain band displayed on the image display means;
spectrum computing means for determining the spectrum of each of the pixels specified by the pixel specifying means; and
display means for selecting the spectrum of one specified pixel serving as a reference determined by the spectrum computing means from the pixels specified by the pixel specifying means and displaying a relative value of the spectrum of another specified pixel determined by the spectrum computing means with respect to the selected spectrum.

According to a third aspect of the present invention, there is provided an image display method which displays a multiband image obtained by a multiband camera capable of capturing at least two bands, the image display method characterized by comprising:

a step of displaying an image of a certain band in the multiband image;
a step of specifying at least one pixel on the image of the displayed certain band;
a step of estimating a spectrum from the signal value of the specified at least one pixel in the multiband image; and
a step of displaying the estimated spectrum.

According to a fourth aspect of the present invention, there is provided an image display method which displays a multiband image obtained by a multiband camera capable of capturing at least two bands, the image display method characterized by comprising:

a step of displaying an image of a certain band in the multiband image;
a step of specifying at least two pixels in the image of the displayed certain band;
a step of determining the spectrum of each of the specified pixels; and
a step of selecting the determined spectrum of one specified pixel serving as a reference from the specified pixels and displaying a relative value of the determined spectrum of another specified pixel with respect to the selected spectrum.

Brief Description of Drawings

FIG. 1 shows the configuration of an image display apparatus according to a first embodiment of the present invention;
FIG. 2 shows a band image screen;
FIG. 3 shows an interpolation method selection screen;
FIG. 4 shows a spectrum output screen;
FIG. 5 shows the configuration of a modification of the image display apparatus according to the first embodiment;
FIG. 6 shows a band image screen on which a band image is displayed when a color chip is captured;
FIG. 7 shows a reference image screen on which a created reference image is displayed;
FIG. 8 shows a band selection screen;
FIG. 9 shows an interpolation method selection screen in the modification;
FIG. 10 shows the configuration of another modification of the image display apparatus according to the first embodiment;
FIG. 11 is a graph showing the relative values of signal values (luminances) using area 1 as a reference;
FIG. 12 shows the configuration of still another modification of the image display apparatus according to the first embodiment;
FIG. 13 shows a display example in an image display apparatus according to a second embodiment of the present invention;
FIG. 14 shows another display example in the image display apparatus according to the second embodiment;
FIG. 15 shows still another display example in the image display apparatus according to the second embodiment;
FIG. 16 shows that a reference area is specified with a mouse in an image display apparatus according to a third embodiment of the present invention;
FIG. 17 shows a color difference image displayed as a result of the specification; and
FIG. 18 shows another display example in the image display apparatus according to the third embodiment.

Best Mode for Carrying Out the Invention

Hereinafter, referring to the accompanying drawings, the best mode for carrying out the invention will be explained.

[First Embodiment]

As a first embodiment of the present invention, a method of displaying a single level spectrum in an arbitrary place on an image will be explained.

In an image display apparatus of the first embodiment, a multiband camera 1 is controlled by a computer 11 as shown in FIG. 1. The multiband camera 1 generally incorporates a CCD as an image capturing element, captures images, converts the images into electronic image data, and sends the image data to the computer 11. The captured images are present in the form of a multiband image 12 on a memory managed by the computer 11. The images may be captured as needed. Alternatively, previously captured images may be read from a storage medium, such as a hard disk, and developed as a multiband image 12 on the memory. Therefore, when the processes in the embodiment are carried out, the multiband camera 1 is not necessarily used.

The computer 11 calculates a spectrum from the multiband image 12 at a spectrum computing section 13 and displays a graph on a spectrum output screen 14. In this embodiment, an IBM PC-AT compatible machine is used as the computer 11 and Windows® 2000 is used as the OS. The spectrum output screen 14 is a window screen managed by Windows® 2000 and is displayed on a monitor, such as a CRT.

If the multiband camera 1 has 18 bands, the multiband image 12 is composed of 18 band images. The computer 11 displays an image of the band specified by the user. For example, an image of band 6 is displayed as shown in FIG. 2. While looking at the band image screen 15, the user specifies the place of the spectrum the user wants to display. In the example of FIG. 2, five rectangles have been specified using the drag and drop function (a method of specifying the top right and top left of the rectangular) of a mouse as a pointing device of the computer 1. The number of areas and the shapes of areas may differ, depending on the user. In this case, too, the different numbers and shapes are within the scope of this embodiment.

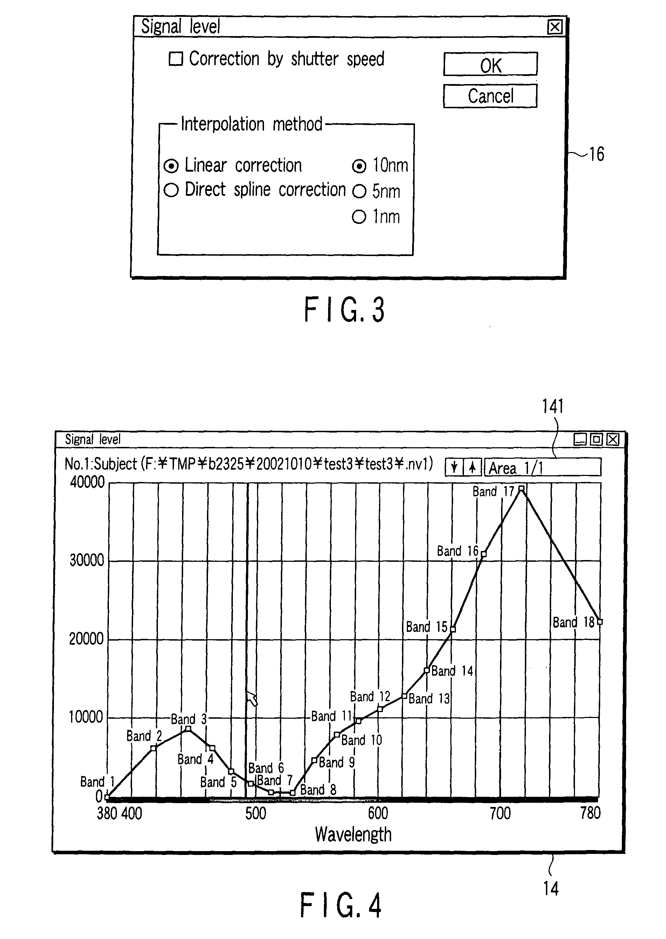

Then, when the user selects the menu "Spectral display of signal values" (not shown), the computer 11 displays a GUI as shown in FIG. 3, that is, an interpolation method selection screen 16 to prompt the user to select an interpolation method.

If linear interpolation is selected on such an interpolation method selection screen 16, the computer 11 calculates the pixel values in each rectangle at the spectrum computing section 13, that is, calculates the average value of the signal values of the CCD elements of the multiband camera 1. Then, the luminances are plotted band by band and connected with straight lines to form a graph. This graph is displayed as a spectrum output screen 14 as shown in FIG. 4. The ordinate axis of the graph indicates the intensity of the signal. If the output of the CCD element contains 16 bits, the signal intensity (luminance) can take a value in the range from 0 to 65535. The abscissa axis indicates wavelength. In this example, band 1 has a central wavelength of 380 nm and band 2 has a central wavelength of 418 nm. Similarly, luminances are plotted using the central wavelengths of up to band 18. Since the selected interpolation method is linear interpolation in this example, the space between bands is interpolated with a straight line. At the top right of the spectrum output screen 14, an area selection list box 141 is provided. Selecting the area selection list box 141 makes it possible to observe the signal intensity spectrum in each area specified on the band image screen 15, while switching areas as needed.

In addition, when the user selects spline interpolation on the interpolation method selection screen 16 of FIG. 3, the user selects an interpolation interval from 10 nm, 5 nm, and 1 nm and determines an x-coordinate and a y-coordinate in band 1 to band 18 as in linear interpolation and then makes spline correction.

As described above, a signal level spectrum in an arbitrary place on the image can be displayed.

A method of displaying a dispersion spectrum in an arbitrary place on the image will be explained as a modification of the embodiment.

In this case, as shown in FIG. 5, a reference image 17 is added to the same configuration as that of FIG. 1. The spectrum computing section 13 calculates a dispersion spectrum.

Specifically, a dispersion spectrum is displayed in graph form in such a manner that spectral reflectivity is used for an ordinary object and that; when a transmitting object is observed as under a microscope, spectral transmittance is used. Therefore, an image serving as a reference for calculating the reflectivity or transmittance, that is, a reference image 17, is needed. When a reflectivity spectrum is found, the reference image 17 is an image obtained by capturing a standard white plate as an object. When a transmittance spectrum is determined, only an image with illuminating rays from which the object to be observed has been removed is used as the reference image 17.

Specifically, the reference image 17 is captured in such a manner that a capturing subject is replaced with a standard white plate in the same sequence as capturing a multiband image 12. Thus, capturing has to be done once more to capture such a standard white plate, in addition to capturing the multiband image 12. However, if a reference place can be captured together with the multiband image 12, the image to be multiband-captured need solely be captured.

Hereinafter, the method will be explained. FIG. 6 shows a band image screen 15 on which the user-specified band image or a band image set as an initial one of the multiband image 12 obtained by capturing a capturing subject is displayed. In this example, color chips are capturing subjects. If any one of the color chips has a reflectivity of almost 100%, it may be defined as being treated similarly as the standard white plate. In this example, the rectangle at the bottom left of FIG. 6 corresponds to the place. The user specifies the place by a drag and drop operation with the mouse. Alternatively, the computer 11 may recognize the place automatically. In this example, the specified place is shown by a rectangle 151. The computer 11 creates a reference image 17 using the average value of the signal values (luminances) of the rectangle 151. The reference image 17 thus created is displayed on a reference image screen 18 as shown in FIG. 7, thereby prompting the user to acknowledge it.

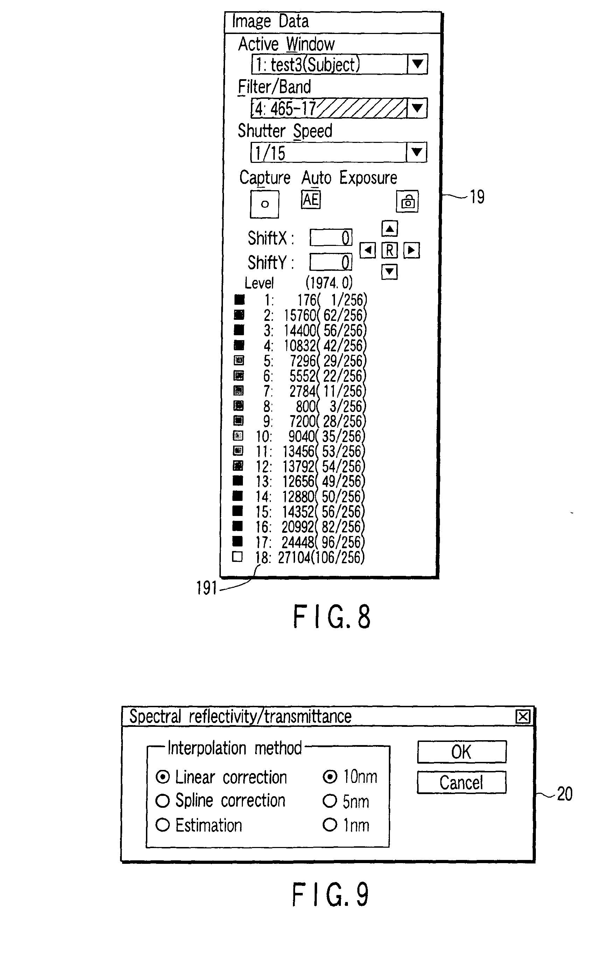

Since an object whose reflectivity is 100% with respect to a light source is ideal for the reference image 17, a GUI as shown in FIG. 8, that is, a band selection screen 19, is displayed to find a place where the signal value (luminance) is high, one of the mouse positions or a plurality of pixels is defined as an area, and then the signal values (luminances) of the pixels are displayed, which makes it easier to make evaluations of the signal values. Here, the part below "Level" at the middle right of FIG. 8 indicates band numbers 191. In the part, band 1 to band 18 are displayed. Values "(1974, 0)" to the left of "Level" represent the mouse position on the image displayed on the present band image screen 15. Numbers below that represent signal values. For example, in band 1, "176(1/256)" is displayed, which means that the signal value is 176 in 16-bit data. Since the display of the computer 11 often represents luminance in 256 tones in the range of 0 to 255, the numbers in the parentheses indicate the equivalent value in the 256-tone conversion. In this case, the value is 1.

The spectrum computing section 13 calculates spectral reflectivity/transmittance and displays the results on the spectrum output screen 14. The method will be explained following its procedure. The place of an object whose spectral reflectivity/transmittance spectrums are to be displayed is specified on the multiband image 12 of the object. FIG. 2 shows the way the place is specified. The input method follows the above-described procedure. The image is paired with the reference image 17. The creating method is to create a reference image from a photographic subject as described above or to capture a new image of a reference plate alone.

Next, the reflectivity/transmittance is determined. In this example, since color chips are used, the reflectivity is determined. The reflectivity can be determined using the following equation.

The reflectivity in a specified band of a capturing subject = (the average value of specified areas in the specified band of the capturing subject)/(the average value of specified areas in the specified band of the reference image) Since in the example of FIG. 2, the number of bands is 18, a value is determined band by band. Since there are five specified areas, the reflectivity is determined in each area. For example, suppose area 1 at the bottom left of FIG. 2 is a white plate. When the reference image 17 is created from this place by the above-described method, the reflectivity in area 1 is 1 for all of the bands. Since the signal value must be generally smaller than that of the reference image 17 in the remaining areas, this usually gives $0 \leq$ reflectivity $\leq 1.0$.

Then, the determined reflectivity is displayed on the spectrum output screen 14 in graph form. In this case, too, the user is allowed to select an interpolation method from a GUI as shown in FIG. 9, that is, on the interpolation method selection screen 20. In the state shown in FIG. 9, linear interpolation has been selected. A method of plotting a graph follows the same procedure as making a graph display of the aforementioned signal level spectrum. That is, the position of the central wavelength of the filter used in each band is determined on the abscissa axis of the graph in FIG. 4 by wavelength conversion and the values of reflectivity are plotted on the ordinate axis. Accordingly, while the ordinate axis indicates signal values in the aforementioned case, plotting is generally done with the maximum value being 1.0 in the case of spectral reflectivity. In linear interpolation, the space between plots is interpolated with a straight line as described above, thereby completing a spectral graph.

Furthermore, when spline interpolation has been selected as the interpolation method on the interpolation method selection screen 20 of FIG. 9, approximation is performed using a spline curve after the user is caused to determine whether to carry out interpolation at intervals of 10 nm, 5 nm, or 1 nm.

Using FIGS. 6 and 7, the way the user creates the reference image 17, while checking the image with the user's own eyes, has been explained. In addition to this, a modification of the method of creating the reference image 17 will be explained.

A reference plate is such that it ideally reflects 100% of illuminating light. Therefore, if there is a place corresponding to the reference plate in a band image displayed on the band image screen 15 of FIG. 6, the luminance of the signal in that place must be higher than the other. Thus, the signal values (luminances) of all of the pixels in a band image as shown in FIG. 6 are checked and the values are arranged in decreasing order of brightness. Then, of them, 30 pixels are used as image information in the position of the reference plate, beginning with the brightest one. From the average value of the signal values of the 30 pixels, the reference image 17 as shown on the reference image screen 18 of FIG. 7 can be created.

As another modification of the embodiment, a method of creating the reference image 17 with an overexposed part removed will be explained. In the case of a band image as displayed on the band image screen 15 of FIG. 6, even if the user thought he or she capture the band image with a suitable exposure time, there is a possibility that a part of the image will be very bright. For example, since the material of the reference plate and the lighting position have been adjusted, the specular reflection part are often removed. In contrast, when a regular reference plate cannot be prepared or when the lighting condition cannot be made proper, it is conceivable that the part of the image to be referred to includes a specular reflection part. In such a case, after the signal values (luminances) of all of the pixels in the band image are checked and then are arranged in decreasing order of brightness, those equal to or higher than a specific luminance are removed. For example, if the maximum value of the signal value is 255, the signal values equal to or larger than 240 out of the arranged pixels are removed because they belong to the specular reflection part. Then, from the remaining pixels, 30 pixels with higher luminance can be used to create the reference image 17 by the same method. Although in the example, the threshold has been set at 240, a similar method holds with other values, depending on the input means for a multiband image 12, the width of the signal value, the capturing object, or the user's specification.

Next, an example of estimating a dispersion spectrum by a spectrum estimation method as disclosed in U.S. Pat. No. 6,549,653 will be explained.

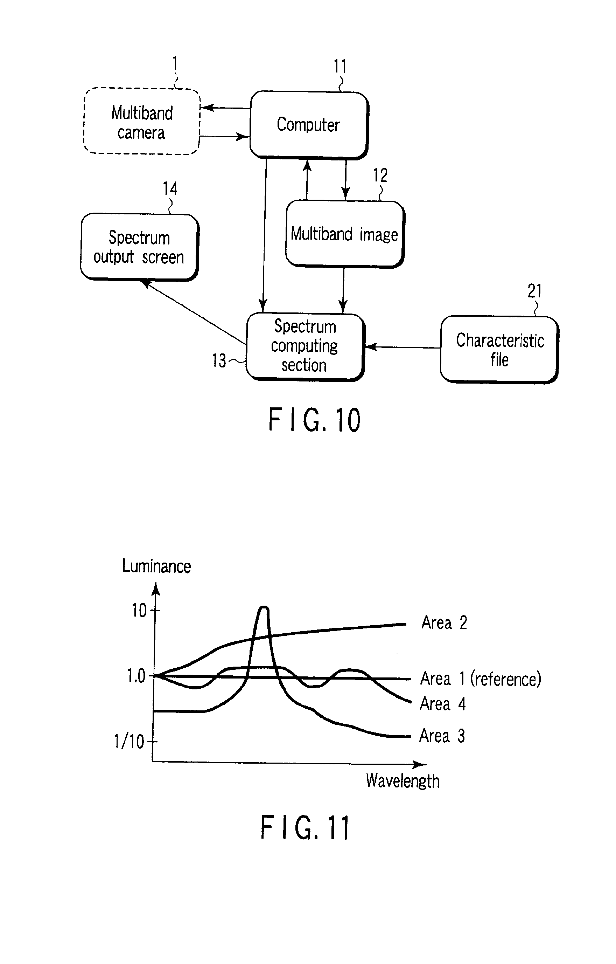

FIG. 10 shows such configuration. The configurations and functions of the multiband camera 1, computer 11, multiband image 12, and spectrum output screen 14 are the same as those in FIG. 1. A dispersion spectrum is estimated at the spectrum computing section 13. The estimation method has been described in U.S. Pat. No. 6,549,653. The file necessary for the estimation is prepared in the form of a characteristic file 21. The spectrum computing section 13 refers to the characteristic file 21.

Next, the procedure will be explained. As heretofore, an image is displayed as shown in FIG. 2, which helps the user to specify a place where the user wants to calculate a spectrum. In FIG. 2, five areas have been specified. Thereafter, when the user has selected a spectral reflectivity/spectral transmittance spectrum display menu, an interpolation method selection screen 20 in FIG. 9 is displayed. Then, when "Estimation" has been selected as the interpolation method, a spectrum is estimated in the five areas previously selected by the method disclosed in U.S. Pat. No. 6,549,653. The result is represented in a graph as shown in FIG. 4. In this case, the ordinate axis indicates reflectivity, which generally takes a value in the range of 0 to 1.0 with the maximum value being 1.0.

In any of the above methods, the area has been specified using a band image screen 15 as shown in FIG. 2. However, if the estimation process is executed at such a high speed that the user does not feel stressed, the user is able to select one pixel or a plurality of pixels with the mouse and the spectrum in that place may be calculated in real time and displayed. Alternatively, for example, area 1 to area 5 may be specified in advance by a mixture of these methods and area 6 may be set in the present mouse position and the spectrum be displayed there.

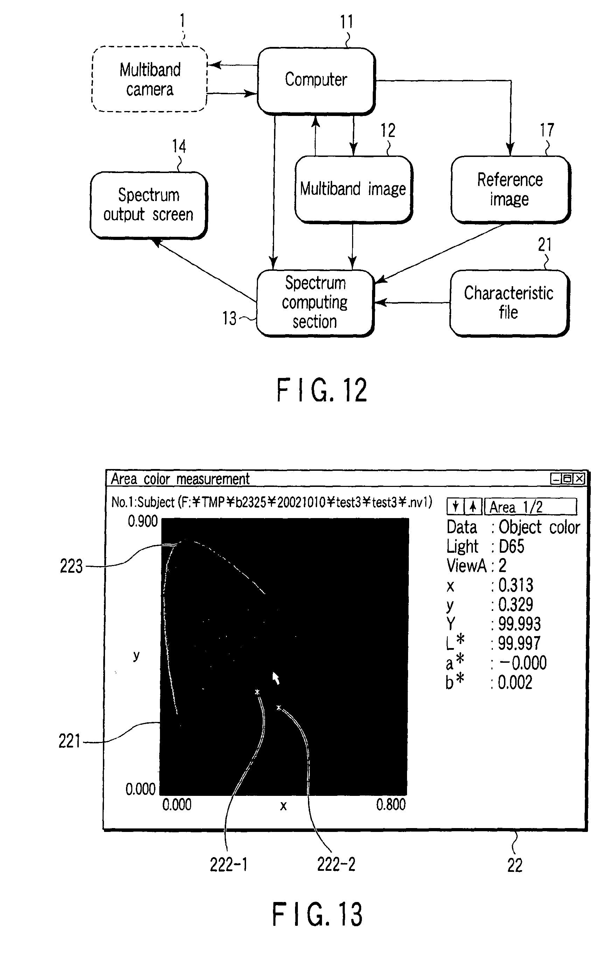

Furthermore, while the spectrums in a plurality of areas have been compared by displaying a graph for each area as shown in FIG. 4 and changing the selection of areas, the window of FIG. 4 may be created for each area and those areas be arranged in tile form, thereby making it possible to compare them. Alternatively, colors may be changed on an area-by-area basis in a single window and be displayed at the same time. Moreover, when signals values or spectrums of spectral reflectivity/transmittance spectrums are compared relatively, relative values with a certain area as a reference may be displayed as shown in FIG. 11. In FIG. 11, the ordinate axis indicates the relative values of signal values (luminances) using area 1 as a reference and a graph display is made.

Furthermore, as shown in FIG. 12, the configuration of FIG. 5 may be combined with the configuration of FIG. 10, thereby enabling the user to select one of them as needed.

In the above-described method, it is possible to specify a place where the user wants to determine a spectrum in an image and display a graph. Even when there are a plurality of estimation methods, it is possible to select one of them. When a reference image 17 is created, it can be created from the specified area. The above method enables the user to specify the place where the user wants to display a spectrum, while looking at the image and to display the spectrum in the area. Since the user can change areas one after another in which a graph is to be drawn, this produces the effect of enabling the user to distinguish the spectrums in individual areas at a glance.

[Second Embodiment]

Next, a second embodiment of the present invention will be explained. The second embodiment is such that a specific area is specified on a multiband image captured by a multiband camera 1 and the chromaticity value and chromaticity diagram of the place are displayed.

Since a chromaticity value is estimated from spectral reflectivity/transmittance spectrums, the configuration is the same as in the first embodiment. Specifically, first, the spectrum computing section 13 calculates spectral reflectivity/ transmittance spectrums by the method explained in the first embodiment. Thereafter, a chromaticity value is determined by a method described later. The result is displayed on a screen in the same window or in another window as on the spectrum output screen 14. Since a chromaticity value is found from the spectral reflectivity/transmittance spectrums, the configuration of FIG. 1, FIG. 5, FIG. 10, or FIG. 12 can be considered, depending on the estimation method.

Next, a method of displaying the chromaticity values XYZ, xyz, and L*,a*,b* will be explained.

First, the user specifies a part whose color the user wants to measure and estimates the spectral reflectivity/transmittance spectrum in the place. The method is as explained in the first embodiment. As a result, suppose the estimated spectral reflectivity/transmittance spectrum is R($\lambda$). In this embodiment, suppose $\lambda$ is determined at intervals of 1 nm in the range from 380 nm to 780 nm. If illuminating light is S(X), XYZ are expressed as follows:

$$X = K\Sigma S(\lambda) x(\lambda) R(\lambda)$$

$$Y = K\Sigma S(\lambda) y(\lambda) R(\lambda)$$

$$Z = K\Sigma S(\lambda) z(\lambda) R(\lambda)$$

$$K = 100/(\Sigma S(\lambda) y(\lambda))$$

where x($\lambda$), y($\lambda$), and z($\lambda$) are the values of a color matching function in an XYZ color system and $\lambda$ is in the range from 380 to 780 in $\Sigma$. From the XYZ determined here, xyz can be determined using the following equations:

$$x = X/(X+Y+Z)$$

$$y = Y/(X+Y+Z)$$

$$z = Z/(X+Y+Z)$$

Furthermore, if rendering illuminating light is e(X), when L*,a*,b* are calculated, they are expressed by the following formulas:

$$L^{*} = 116 \cdot \left(\frac{Y}{Y_0}\right)^{\frac{1}{3}} - 16 \qquad X_0 = \sum_{\lambda=380}^{780} x(\lambda) \cdot e(\lambda)$$

$$a^{*} = 500 \cdot \left(\frac{X}{X_0}\right)^{\frac{1}{3}} - \left(\frac{Y}{Y_0}\right)^{\frac{1}{3}} \qquad Y_0 = \sum_{\lambda=380}^{780} y(\lambda) \cdot e(\lambda)$$

$$b^{*} = 200 \cdot \left(\frac{Y}{Y_0}\right)^{\frac{1}{3}} - \left(\frac{Z}{Z_0}\right)^{\frac{1}{3}} \qquad Z_0 = \sum_{\lambda=380}^{780} z(\lambda) \cdot e(\lambda)$$

The values determined from the above formulas are displayed in a window 22 as shown in FIG. 13. On the right side of the window 22, the following are shown: (x, y) is (0.313, 0.329), Y is 99. 993, and (L*, a*, b*) is (99.997, 0.000, 0.002) in area 1. Moreover, the values of (x, y) are plotted in a chromaticity diagram 221 on the left side of the window 22. In this example, since two areas have been defined, plotting is done for each of the areas (point 222-1, point 222-2).

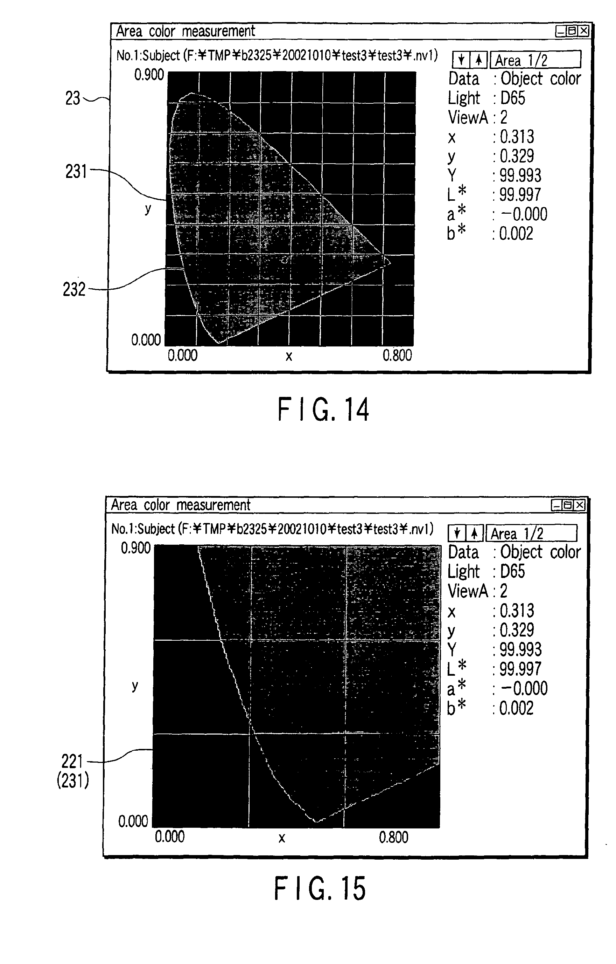

Taking the user's convenience into account, those closest to the colors the computer 11 can display are displayed in a bell shape 223, the visible region in the chromaticity diagram 221 (where the bottom right of the bell shape 223 is red, the bottom left is blue, and the top is green). On the other hand, a user who wants to use the gray scale displays a chromaticity diagram in such a manner that the part outside the bell shape is made black, the inside of the bell shape is made gray, and a scale is provided so as to read (x, y) accurately. It is convenient to switch between a window 22 as shown in FIG. 13 and a window 23 as shown in FIG. 14 by specifying the menu at the right click of the mouse. Although not shown here, the user may be caused to select a chromaticity diagram marked with a scale in color display. Moreover, when the user wants to see detailed information on a part of chromaticity diagrams 221, 223, it is convenient to be able to display enlarged views of a part of the chromaticity diagrams 221, 223 as shown in FIG. 15 by selecting the menu at the right click of the mouse.

In the above method, areas have been specified using a band image screen 15 as shown in FIG. 2. However, if the estimation process is executed at such a high speed that the user does not feel stressed, the user is able to select one pixel or a plurality of pixels with the mouse and the chromaticity value and chromaticity diagram of the position may be displayed in real time. Alternatively, for example, area 1 to area 5 may be specified in advance by a mixture of these methods and area 6 may be set in the present mouse position and the chromaticity value and chromaticity diagram be displayed there. Since the spectral reflectivity/transmittance spectrum has been calculated in the middle of the above process, its graph can be displayed in the same window or in another window.

By the above method, it is possible to specify a specific area on an image captured by the multiband camera 1 and display the chromaticity value and chromaticity diagram of the place. When a plurality of areas have been set, plotted positions are displayed simultaneously on the chromaticity diagram to compare them to obtain the difference between them.

[Third Embodiment]

Next, a third embodiment of the present invention will be explained. The third embodiment is such that a specific area is specified on an image captured by a multiband camera 1 and, using the place as a reference, the color difference from another area.

The configuration of the third embodiment is the same as the second embodiment.

In the third embodiment, a color difference is displayed in the form of an image. First, an area serving as a reference is specified and a chromaticity value is determined. The method of doing this is as explained in the second embodiment. For example, a reference area is specified on the band image screen 15 shown in FIG. 6 and a chromaticity value is determined. Suppose the value is $(L_0^*, a_0^*, b_0^*)$. A color difference $\Delta E$ is expressed by the following formula:

$$\Delta E = ((L_0^*-L_1^*)^2 + (a_0^*-a_1^*)^2 + (b_0^*-b_1^*)^2)^{1/2}$$

where $(L_1^*, a_1^*, b_1^*)$ is the chromaticity value in the place of an object to be compared.

In the third embodiment, a color difference using area 1 as a reference is obtained for all of the pixels in the screen and the results are represented in the form of an image. Now, let the pixel at the top left be expressed by $I_0$, similarly $I_2$, $I_3$, in that order, and let the pixel at the bottom right be expressed by $I_n$. If the image has 2048 x 2048 pixels, then n = 4194303. At this time, since a color difference is found for all of the pixels, the color differences at that time are determined to be $\Delta E_0$ to $\Delta E_n$. Next, if of them, the maximum color difference value is $\Delta E_{max}$ and the minimum color difference value is $\Delta E_{min}$, the pixel value $D_i$ of an i-th pixel on the gray scale displayed in the image can be expressed by the following equation:

$$D_i = (\Delta E_i-\Delta E_{min})/(\Delta E_{max}-\Delta E_{min}) \times 255$$

where $0 \leq i \leq n$ and the tones which can be displayed on a window image is assumed to be 0 to 255. Therefore, if pixel

$I_i$ in the original image window is replaced with pixel value $D_i$, a color difference with respect to a reference area can be displayed in the form of an image.

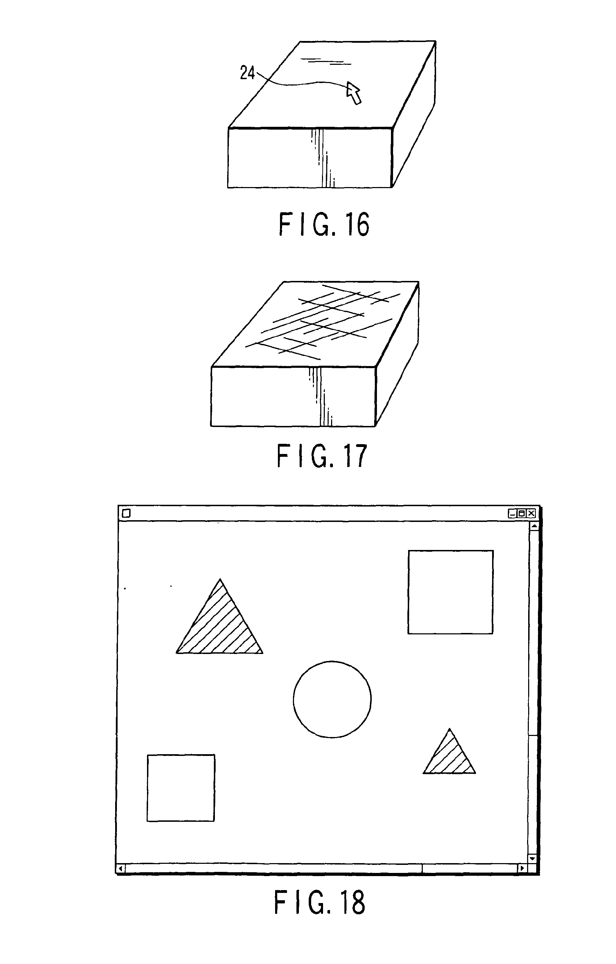

FIGS. 16 and 17 show its example. In this example, instead of setting a rectangle as a reference area in advance, an area composed of one pixel at the position of a mouse pointer 24 or several pixels in the vicinity of the position is set as a reference area. FIG. 16 shows the way a reference area is specified using a mouse. As a result, FIG. 17 shows a color difference image.

Next, as a modification of the embodiment, explanation will be given as to a method of giving a different color from that of the original only when the color difference ∆E is smaller than or larger than a specified reference value, that is, the threshold.

The way of determining a reference area and finding a color difference ∆E for all of the pixels in an image is identical to the above-described method. Suppose the color differences found for pixels $I_0$ to In are $\Delta E_0$ to $\Delta E_n$. Here, it is determined whether the color difference $\Delta E_i$ of each pixel is larger or smaller than a reference color difference $\Delta E_S$ serving as the threshold. Suppose, when the color difference of a pixel is smaller than the reference value, the pixel is painted with red ((R, G, B) = (255, 0, 0)) and when the color difference is equal to or larger than the reference value, nothing is done and the original image (pixel) is displayed. The result is shown in FIG. 18. It is seen that the part painted with red (the hatching part) has a color difference smaller than the reference value and is close in color to the reference area. Similarly, giving a color only to a part whose color difference is larger than the threshold makes it possible to check a place whose color difference from the reference area is large.

In this example, too, if the estimation process is executed at such a high speed that the user does not feel stressed, the user is able to select one pixel or a plurality of pixels with the mouse and an image representing color differences may be displayed in real time.

In the above method, a specific area is specified in the image captured by the multiband camera 1 and, using the place as a reference, a color difference from another area can be displayed. Moreover, color differences can be displayed in the form of an image using an area other than the reference area as a pixel unit. This produces the effect of enabling the user to make a comparison between and an evaluation of color differences, while making clear their size and the positions on the image.

As described above, the present invention explained using the embodiments makes it possible to specify a single target area or a plurality of target areas with a GUI for the software that deals with the data of the multiband camera 1 and observe an estimated spectrum in the place as needed. Here, the spectrum may be a signal value (luminance) obtained on the input means side, such as the CCD element of the multi-spectrum camera, or spectral reflectivity or spectral transmittance. The user can not only observe the spectrum in the specified area but also see the relative values of areas in a graph.

Furthermore, after the spectral reflectivity/transmittance spectrums have been found, color measurement values and chromaticity values are determined and these values and a chromaticity diagram can be displayed. In the case of chromaticity values, a relative value is found as a color difference (∆E) from an area (which may be composed of one pixel) serving as a reference. A color difference smaller or larger than a specified one is given a different color from the gray scale, thereby displaying an image, which enables the user to evaluate a captured image visually. Any data, including estimated spectrums, color measurement values, chromaticity values, and color differences, are observed in real time by specifying the place of the reference area on the image with the mouse, which produces the effect of making it easier for the user to evaluate the images taken by the multiband camera 1.

Although the present invention has been explained on the basis of the embodiments, the invention is not limited to the above embodiments and, of course, may be practiced or embodied in still other ways without departing from the spirit or essential character thereof.

**Claims**

**1.** An image display apparatus which displays a multiband image (12) obtained by a multiband camera (1) capable of capturing at least two bands, the image display apparatus **characterized by** comprising:

image display means (11) for displaying an image of a certain band in the multiband image;
pixel specifying means (11) for specifying at least one pixel on the image of the certain band displayed on the image display means;
spectrum estimation means (13) for estimating a spectrum from the signal value of the at least one pixel specified by the pixel specifying means in the multiband image; and
spectrum display means (14) for displaying the spectrum estimated by the spectrum estimation means.

**2.** The image display apparatus according to claim 1, **characterized in that** the spectrum is a luminance spectrum of the signal value.

3. The image display apparatus according to claim 1, **characterized in that** the spectrum is a dispersion spectrum.

4. The image display apparatus according to claim 1, **characterized in that** the spectrum estimation means determines a spectrum through the interpolation of luminance data between individual band images in the multiband image.

5. The image display apparatus according to claim 4, **characterized in that** the interpolation is linear interpolation.

6. The image display apparatus according to claim 4, **characterized in that** the interpolation is a spline curve.

7. The image display apparatus according to claim 3, **characterized in that** the spectrum estimation means uses a reference image (17) corresponding to the multiband image and estimates a spectrum from the signal value of the at least one pixel corresponding to both of the multiband image and the reference image.

8. The image display apparatus according to claim 7, **characterized by** further comprising reference image creating means (11) for creating the reference image from the signal value of the at least one pixel in the multiband image.

9. The image display apparatus according to claim 8, **characterized in that** the reference image creating means includes
pixel selection means (11) for receiving the designation of the shape and position of a desired area on the image of the certain band displayed on the image display means and selecting pixels to be used, and
creating means (11) for creating the reference image from the values of the pixels to be used selected by the pixel selection means.

10. The image display apparatus according to claim 9, **characterized in that** the creating means creates the reference image on the basis of the average value of the values of the pixels to be used selected by the pixel selection means.

11. The image display apparatus according to claim 8, **characterized in that** the reference image creating means automatically finds the places of pixels whose luminance values are high from all of the pixels in a band in the multiband image, determines the pixel value, and on the basis of the pixel values, creates the reference image.

12. The image display apparatus according to claim 11, **characterized in that** the reference image creating means, when finding the places of pixels whose luminance values are high, sets a threshold corresponding to the intensity of the luminance, removes the pixels whose luminance values are higher than the threshold because of overexposure, and finds the places of the pixels whose luminance values are high from pixels whose luminance values equal to or lower than the threshold.

13. The image display apparatus according to claim 8, **characterized in that** the reference image creating means includes means (11, 13, 14) for providing luminance information on at least one pixel specified in such a manner that the information is recognizable at a glance over all bands.

14. The image display apparatus according to claim 3, **characterized by** further comprising chromaticity information computing means (13) for finding chromaticity information from a dispersion spectrum estimated at the spectrum estimation means.

15. The image display apparatus according to claim 14, **characterized in that** the spectrum display means displays the chromaticity value (x, y) of the chromaticity information found at the chromaticity information computing means in the form of a chromaticity diagram (221, 231).

16. The image display apparatus according to claim 15, **characterized in that** the spectrum display means has the function of enlarging an arbitrary part of the displayed chromaticity diagram.

17. The image display apparatus according to claim 14, **characterized in that** the chromaticity information computing means has the function of acquiring at least two pieces of chromaticity information in the same image or different images and comparing the pieces of chromaticity information.

18. The image display apparatus according to claim 17, **characterized in that** the method of comparing at least two pieces of chromaticity information at the chromaticity information computing means is to compare the chromaticity values (x, y and L*, a*, b*).

19. The image display apparatus according to claim 18, **characterized in that** the comparison of the chromaticity values is made in such a manner that the chromaticity value of at least one target pixel is used as a reference value and the color difference between another pixel and the reference value is determined, and
the spectrum display means represents the determined color difference in the form of an image.

20. The image display apparatus according to any one of claims 1, 9, 10, 12 to 15, and 17 to 19, **characterized in that** the pixel specifying means
includes moving means (11) for moving a pointer to an arbitrary position on the image of the certain band displayed on the image display means, and
automatically specifies the pixel in the position at which the pointer points according to the movement of the pointer by the moving means.

21. An image display apparatus which displays a multiband image obtained by a multiband camera (1) capable of capturing at least two bands, the image display apparatus **characterized by** comprising:

image display means (11) for displaying an image of a certain band in the multiband image;
pixel specifying means (11) for specifying at least two pixels in the image of the certain band displayed on the image display means;
spectrum computing means (13) for determining the spectrum of each of the pixels specified by the pixel specifying means; and
display means (14) for selecting the spectrum of one specified pixel serving as a reference determined by the spectrum computing means from the pixels specified by the pixel specifying means and displaying a relative value of the spectrum of another specified pixel determined by the spectrum computing means with respect to the selected spectrum.

22. An image display method which displays a multiband image (12) obtained by a multiband camera (1) capable of capturing at least two bands, the image display method **characterized by** comprising:

a step of displaying an image of a certain band in the multiband image;
a step of specifying at least one pixel on the image of the displayed certain band;
a step of estimating a spectrum from the signal value of the specified at least one pixel in the multiband image; and
a step of displaying the estimated spectrum.

23. An image display method which displays a multiband image obtained by a multiband camera (1) capable of capturing at least two bands, the image display method **characterized by** comprising:

a step of displaying an image of a certain band in the multiband image;
a step of specifying at least two pixels in the image of the displayed certain band;
a step of determining the spectrum of each of the specified pixels; and
a step of selecting the determined spectrum of one specified pixel serving as a reference from the specified pixels and displaying a relative value of the determined spectrum of another specified pixel with respect to the selected spectrum.

FIG.1

FIG.2

## FIG. 3

**Signal level** ☒

☐ Correction by shutter speed

[ OK ]
[ Cancel ]

─ Interpolation method ─
⊙ Linear correction     ⊙ 10nm
○ Direct spline correction ○ 5nm
○ 1nm

~16

**FIG. 3**

141

**Signal level** ☐ ▭ ☒

No.1:Subject (F:¥TMP¥b2325¥20021010¥test3¥test3¥.nv1) [▼][▲][Area 1/1]

40000
Band 17

30000
Band 16

Band 18
20000
Band 15

Band 14

Band 12  Band 13
10000  Band 11
Band 3  Band 10
Band 2  Band 9
Band 4
Band 1  Band 6
Band 5  Band 7
0  Band 8
380 400      500       600       700       780
Wavelength

14

**FIG. 4**

FIG. 5

FIG. 6

FIG. 7

Image Data

Active Window
1: test3(Subject) ▼

Filter/Band
4: 465-17 ▼

Shutter Speed
1/15 ▼

Capture   Auto Exposure

○   AE   🔒   ~19

ShiftX : 　0　   ▲
　　　　　　　　◄ R ►
ShiftY : 　0　   ▼

Level   (1974. 0)
■  1:   176( 1/256)
■  2: 15760( 62/256)
■  3: 14400( 56/256)
■  4: 10832( 42/256)
▨  5:  7296( 29/256)
▨  6:  5552( 22/256)
▨  7:  2784( 11/256)
▨  8:   800(  3/256)
▨  9:  7200( 28/256)
▨ 10:  9040( 35/256)
▨ 11: 13456( 53/256)
▨ 12: 13792( 54/256)
■ 13: 12656( 49/256)
■ 14: 12880( 50/256)
■ 15: 14352( 56/256)
■ 16: 20992( 82/256)
■ 17: 24448( 96/256)
□ 18: 27104(106/256)

191

# FIG. 8

Spectral reflectivity/transmittance   ☒

┌─Interpolation method────────┐
│ ⦿ Linear correction   ⦿ 10nm │   ┌──────────┐
│ ○ Spline correction   ○ 5nm  │   │    OK    │
│ ○ Estimation          ○ 1nm  │   └──────────┘
└──────────────────────────────┘   ┌──────────┐
                                    │  Cancel  │   ~20
                                    └──────────┘

# FIG. 9

EP 1 672 340 A1

FIG. 10

FIG. 11

FIG. 12

No.1:Subject (F:¥TMP¥b2325¥20021010¥test3¥test3¥.nv1)

Area 1/2

Data : Object color
Light : D65
ViewA : 2
x : 0.313
y : 0.329
Y : 99.993
L* : 99.997
a* : −0.000
b* : 0.002

FIG. 13

Area color measurement

No.1:Subject (F:¥TMP¥b2325¥20021010¥test3¥test3¥.nv1)  Area 1/2

23

231

y

232

0.900

0.000

0.000        x        0.800

Data : Object color
Light : D65
ViewA : 2
x : 0.313
y : 0.329
Y : 99.993
L* : 99.997
a* : -0.000
b* : 0.002

F I G. 14

Area color measurement

No.1:Subject (F:¥TMP¥b2325¥20021010¥test3¥test3¥.nv1)  Area 1/2

y

221
(231)

0.900

0.000

0.000        x        0.800

Data : Object color
Light : D65
ViewA : 2
x : 0.313
y : 0.329
Y : 99.993
L* : 99.997
a* : -0.000
b* : 0.002

F I G. 15

F I G. 16

F I G. 17

F I G. 18

**INTERNATIONAL SEARCH REPORT**

| International application No. |
| --- |
| PCT/JP2004/014847 |

**A. CLASSIFICATION OF SUBJECT MATTER**
Int.Cl⁷ G01J3/51

According to International Patent Classification (IPC) or to both national classification and IPC

**B. FIELDS SEARCHED**

Minimum documentation searched (classification system followed by classification symbols)
Int.Cl⁷ G01J3/00-3/52, H04N5/00-5/956

Documentation searched other than minimum documentation to the extent that such documents are included in the fields searched

| | | | |
| --- | --- | --- | --- |
| Jitsuyo Shinan Koho | 1922-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)
JICST FILE(JOIS)

**C. DOCUMENTS CONSIDERED TO BE RELEVANT**

| Category* | Citation of document, with indication, where appropriate, of the relevant passages | Relevant to claim No. |
| --- | --- | --- |
| X | JP 11-154220 A (Hitachi, Ltd.), 08 June, 1999 (08.06.99), | 1-5,7-8, 20-23 |
| Y | Full text; Figs. 1 to 7 & US 6335984 B1 & CA 2254376 C | 6,14-15, 17-19 |
| Y | JP 2001-99710 A (Fuji Photo Film Co., Ltd.), 13 April, 2001 (13.04.01), Par. Nos. [0009], [0027] (Family: none) | 6 |
| P,X | JP 2004-219092 A (Waseda University), 05 August, 2004 (05.08.04), Par. No. [0018] & WO 2004/063683 A1 | 1-3,21-23 |

☒ Further documents are listed in the continuation of Box C.   ☒ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 29 November, 2004 (29.11.04) | 14 December, 2004 (14.12.04) |

| Name and mailing address of the ISA/ | Authorized officer |
| --- | --- |
| Japanese Patent Office | |
| Facsimile No. | Telephone No. |

Form PCT/ISA/210 (second sheet) (January 2004)

**INTERNATIONAL SEARCH REPORT**

| International application No. |
| --- |
| PCT/JP2004/014847 |

C (Continuation).   DOCUMENTS CONSIDERED TO BE RELEVANT

| Category* | Citation of document, with indication, where appropriate, of the relevant passages | Relevant to claim No. |
| --- | --- | --- |
| P,A | JP 2004-5566 A   (Matsushita Electric Industrial Co., Ltd.), 08 January, 2004 (08.01.04), Par. Nos. [0050] to [0077]; Figs. 1 to 2 & EP 1357736 A2          & US 2004/017586 A1 | 1 |
| A | JP 2000-329617 A  (Minolta Co., Ltd.), 30 November, 2000 (30.11.00), Par. Nos. [0051] to [0054]; Fig. 6 & US 6614533 B1 | 1 |
| Y | JP 6-241905 A  (Takenaka System Kiki Kabushiki Kaisha), 02 September, 1994 (02.09.94), Par. Nos. [0017] to [0031]; Figs. 1 to 3 (Family: none) | 14-15,17-19 |
| Y | JP 5-34202 A  (Juki Corp.), 09 February, 1993 (09.02.93), Par. Nos. [0009] to [0014]; Figs. 1 to 3 (Family: none) | 19 |

Form PCT/ISA/210 (continuation of second sheet) (January 2004)

# INTERNATIONAL SEARCH REPORT

| International application No. |
| --- |
| PCT/JP2004/014847 |

---

**Box No. II**     **Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

---

**Box No. III**     **Observations where unity of invention is lacking (Continuation of item 3 of first sheet)**

This International Searching Authority found multiple inventions in this international application, as follows:

The matter common to (A) claims 1-6, 20-23, (B) claims 7-13, and (C) claims 14-19 relates to that "among the multi-band images obtained by a multi-band camera, an image of a certain band is displayed and the spectrum of the specified pixel obtained". However, the search has revealed that this matter is not novel since it is disclosed, for example, in document JP 11-1154220 A (Hitachi, Ltd.) 09 June, 1999 (08.06.99), paragraphs [0001] to [0018], Figs. 1-7.

Since there exists no other common feature which can be considered as a special technical feature within the meaning of PCT Rule 13.2, second sentence, no technical relationship within the meaning of PCT Rule 13 between the different inventions can be seen. (Continued to extra sheet)

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**     ☐ The additional search fees were accompanied by the applicant's protest.

                                 ☒ No protest accompanied the payment of additional search fees.

Form PCT/ISA/210 (continuation of first sheet (2)) (January 2004)

**INTERNATIONAL SEARCH REPORT**

International application No.

PCT/JP2004/014847

Continuation of Box No.III of continuation of first sheet(2)

   Accordingly, it is obvious that (A) claims 1-6, 20-23, (B) claims 7-13, and (C) claims 14-19 do not satisfy the requirement of unity of invention.

Form PCT/ISA/210 (extra sheet) (January 2004)

<table>
<tr><td colspan="2"><strong>INTERNATIONAL SEARCH REPORT</strong><br>Information on patent family members</td><td>International application No.<br>PCT/JP2004/014847</td></tr>
</table>

| | | |
|---|---|---|
| JP 11-154220 A | 1999.06.08 | US 6335984 B1<br>CA 2254376 C |
| JP 2001-99710 A | 2001.04.13 | (Family: none) |
| JP 2004-219092 A | 2004.08.05 | WO 2004/063683 A1 |
| JP 2004-5566 A | 2004.01.08 | EP 1357736 A2<br>US 2004/017586 A1 |
| JP 2000-329617 A | 2000.11.30 | US 6614533 B1 |
| JP 6-241905 A | 1994.09.02 | (Family: none) |
| JP 5-34202 A | 1993.02.09 | (Family: none) |

Form PCT/ISA/210 (patent family annex) (January 2004)